Europäisches Patentamt

European Patent Office

Office européen des brevets

(11) Veröffentlichungsnummer: **0 483 606 A2**

## EUROPÄISCHE PATENTANMELDUNG

(21) Anmeldenummer: **91117704.6**

(22) Anmeldetag: **17.10.91**

(51) Int. Cl.⁵: **C11D 3/37**, C08G 63/06, C08G 63/60, C08G 63/66

(30) Priorität: **29.10.90 DE 4034334**

(43) Veröffentlichungstag der Anmeldung: **06.05.92 Patentblatt 92/19**

(84) Benannte Vertragsstaaten: **CH DE ES FR GB IT LI SE**

(71) Anmelder: **BASF Aktiengesellschaft Carl-Bosch-Strasse 38 W-6700 Ludwigshafen(DE)**

(72) Erfinder: **Kud, Alexander, Dr. Am Hellbrunn 57 W-6509 Eppelsheim(DE)**
Erfinder: **Baur, Richard, Dr. Nelkenstrasse 1 W-6704 Mutterstadt(DE)**
Erfinder: **Boeckh, Dieter, Dr. Trifelsring 63 W-6703 Limburgerhof(DE)**
Erfinder: **Hartmann, Heinrich, Dr. Weinheimer Strasse 46 W-6703 Limburgerhof(DE)**

(54) **Verwendung von Weinsäure einkondensiert enthaltenden Polyestern als Waschmittelzusatz, Verfahren zur Herstellung der Polyester und Polyester aus Weinsäure und Tetracarbonsäuren.**

(57) Verwendung von wasserlöslichen oder in Wasser dispergierbaren Polyestern, die durch alleinige Kondensation von Weinsäure oder ihren Derivaten oder durch Kondensation von Mischungen aus Weinsäure oder ihren Derivaten und Zitronensäure sowie gegebenenfalls durch Modifizieren mit Alkoholen, wasserlöslichen Polyalkylenglykolen oder wasserlöslichen Polyadditionsprodukten von Alkylenoxiden an Alkohole, Fettsäurenalkylphenole oder Alkylamine sowie gegebenenfalls an mindestens zwei Carboxylgruppen enthaltende Carbonsäuren erhältlich sind, als Zusatz zu Waschmitteln, Verfahren zur Herstellung der Polyester sowie Polyester, die erhältlich sind durch Kondensation von a) Weinsäure oder Weinsäurederivaten gegebenenfalls in Mischung mit Zitronensäure mit b) Alkoholen, wasserlöslichen Polyalkylenglykolen oder wasserlöslichen Additionsprodukten von Alkylenoxiden an Alkohole, Fettsäuren, Alkylphenole oder Alkylamine und c) Butantetracarbonsäure, Cyclopentantetracarbonsäure, Cyclohexantetracarbonsäure den Anhydriden der genannten Carbonsäure und Mischungen bei 120 bis 180°C und K-Werte von 7 bis 80 haben.

EP 0 483 606 A2

Die Erfindung betrifft die Verwendung von wasserlöslichen oder in Wasser dispergierbaren Polyestern, die durch alleinige Kondensation von Weinsäure oder durch Kondensation von Mischungen aus Weinsäure oder Weinsäureanhydrid und Zitronensäure sowie gegebenenfalls Alkoholen und/oder mehrbasischen Carbonsäuren erhältlich sind, als Zusatz zu Waschmitteln, Verfahren zur Herstellung der Polyester sowie Polyester, die Weinsäure und Tetracarbonsäuren einkondensiert enthalten.

Aus der US-PS 3 557 039 sind stabile wäßrige Dispersionen von Polyestern bekannt, die durch Kondensation von Terephthalsäure oder Dimethylterephthalat mit Ethylenglykol und Polyethylenglykol herstellbar sind. Gemäß der Lehre der GB-PS 1 154 730 verringern Zusätze von Polyestern aus Dimethylterepthalat, Ethylenglykol und Polyethylenglykol eines Molekulargewichts von 1500 beim Waschen von Textilgut die Wiederablagerung von Schmutz auf dem Textilgut.

Aus den EP-Anmeldungen 185 427, 241 984, 241 985 und 272 033 sind Polyesterkondensate von mehrwertigen aromatischen Carbonsäuren mit zweiwertigen Alkoholen und einseitig $C_1$- bis $C_4$-Alkylgruppen verschlossenen Polyethern bekannt. Bei der Anwendung in Waschmitteln fördern sie die Schmutzablösung von Polyestergeweben beim Waschen. Die meisten bisher als Waschmittelzusätze beschriebenen Polyester sind weitgehend nichtionischer Natur und eignen sich nicht zur Dispergierung von polaren Schmutzpartikeln und Erdalkalimetallsalzen. Die für diesen Zweck überwiegend angewandten Homo- und Copolymere von z.B. Acrylsäure sind aber nicht oder nur sehr schwer biologisch abbaubar. Schwach anionische Polyester wie sie z.B. in DE-AS 16 17 122 als Vergrauungsinhibitoren beschrieben sind, sind nur sehr schlechte Dispergatoren für polaren partikulären Schmutz und anorganische Salze.

Der vorliegenden Erfindung liegt die Aufgabe zugrunde, dispergierende Waschmittelzusätze zur Verfügung zu stellen, die biologisch abbaubar sind.

Die Aufgabe wird erfindungsgemäß gelöst mit der Verwendung von wasserlöslichen oder in Wasser dispergierbaren Polyestern, die durch alleinige Kondensation von Weinsäure, Weinsäureanhydrid oder durch Kondensation von Mischungen aus Weinsäure oder Weinsäureanhydrid und Zitronensäure im Molverhältnis 1:0,1 bis 1:4 erhältlich sind, als Zusatz zu Waschmitteln. Die Polyester können auch dadurch hergestellt werden, daß man die Kondensation der Weinsäure und/oder Zitronensäure zusätzlich in Gegenwart bis zu 60 Mol.% an Äpfelsäure vornimmt. Die oben beschriebene Aufgabe wird außerdem durch Verwendung von solchen Polyestern gelöst, die durch Kondensation von

a) Mischungen aus Weinsäure oder Weinsäureanhydrid und Zitronensäure im Molverhältnis 1:0,1 bis 1:4 oder solchen Mischungen, die zusätzlich bis zu 60 Mol.% Äpfelsäure enthalten, mit - bezogen auf 1 Mol der Komponente a) -

b) 0 bis 50 Mol.% an ein- oder mehrwertigen Alkoholen, wasserlöslichen Poly-$C_2$-bis $C_4$-alkylenglykolen oder wasserlöslichen Additionsprodukten von $C_2$- bis $C_4$-Alkylenoxiden an ein- oder mehrwertigen Alkohole, Fettsäuren, Alkylphenole oder Alkylamine, und/oder

c) 0 bis 90 Mol.% mindestens zwei Carboxylgruppen enthaltenden Carbonsäuren, die von den unter a) genannten Carbonsäuren verschieden sind sowie gegebenenfalls

d) 0 bis 90 Mol.% Milchsäure, Glykolsäure oder deren Mischungen

in Gegenwart von üblichen Veresterungskatalysatoren erhältlich sind. Solche Polyester sind durch Kondensation der Komponenten a) bis d) in der Schmelze in Abwesenheit von inerten Verdünnungsmitteln bei Temperaturen von 120 bis 180°C in Gegenwart von üblichen Veresterungskatalysatoren und Abdestillieren des bei der Kondensation entstehenden Wassers erhältlich.

Die oben genannte Aufgabe wird außerdem mit Polyestern gelöst, die erhältlich sind durch Kondensation von

a) 25 bis 75 Mol.% Weinsäure, Weinsäureanhydrid oder Mischungen aus Weinsäure oder Weinsäureanhydrid und Zitronensäure im Molverhältnis 1:0,1 bis 1:4 mit

b) 0 bis 50 Mol.% ein- oder mehrwertigen Alkoholen, wasserlöslichen Poly-$C_2$-$C_4$-alkylenglykolen oder wasserlöslichen Additionsprodukten von $C_2$- bis $C_4$-Alkylenoxiden an ein- oder mehrwertige Alkohole, Fettsäuren, Alkylphenole oder Alkylamine,

c) 75 bis 25 Mol.% Butantetracarbonsäure, Cyclopentantetracarbonsäure, Cyclohexantetracarbonsäure, den Anhydriden der genannten Carbonsäuren und Mischungen der genannten Verbindungen,

bei Temperaturen von 120 bis 180°C in Gegenwart von üblichen Veresterungskatalysatoren bis zu K-Werten von 7 bis 80 (bestimmt nach H. Fikentscher an 2 %igen wäßrigen Lösungen der Polyester bei 25°C und pH 7).

Der Zusatz der oben beschriebenen Polyester zu Waschmittelformulierungen fördert beim Waschen von Textilgut die Ablösung von partikulärem Schmutz und stabilisiert den abgelösten Schmutz in der Waschflotte. Die beschriebenen Polyester sind in einem sehr hohen Maße biologisch abbaubar, z.B. liegen die Abbauraten bei einigen Produkten oberhalb von 95 %.

Die erfindungsgemäß zu verwendenden Polyester sind nur zum Teil in der Literatur beschrieben worden. So ist z.B. aus der JP-A-87/201 926 bekannt, Hydroxypolycarbonsäuren, wie Äpfelsäure oder ihre Ester bei Temperaturen von 50 bis 200°C und Drücken unterhalb von 200 mbar zu kondensieren. Die Polymerisate werden beispielsweise als chirurgisches Nahtmaterial verwendet. Aus Ullmanns Encyklopädie der technischen Chemie, 3. Auflage, Urban und Schwarzenberg, München-Berlin 1963, 3. Auflage, Band 14, Seite 82 ist bekannt, daß Polyester durch Polykondensation von Hydroxycarbonsäuren hergestellt werden können. Beispiele dafür werden jedoch nicht genannt.

Die gemäß Erfindung als Zusatz zu Waschmitteln zu verwendenden Weinsäure einkondensiert enthaltenden Polyester werden beispielsweise dadurch hergestellt, daß man Weinsäure oder Weinsäureanhydrid auf Temperaturen von 120 bis 180°C in Gegenwart von üblichen Veresterungskatalysatoren erhitzt und das bei der Kondensation entstehende Wasser aus dem Reaktionsgemisch abdestilliert. Zur Kondensation können auch Mischungen aus Weinsäure und Weinsäureanhydrid eingesetzt werden. Außerdem ist es möglich, Weinsäure unter Mitverwendung von bis zu 60, vorzugsweise bis zu 30 Mol.% Weinsäureestern von $C_1$- bis $C_4$-Alkoholen zu Polyestern zu kondensieren. Hierbei wird dann anstelle von Wasser der jeweils den Estern zugrunde liegende Alkohol aus dem Reaktionsgemisch entfernt. Beispiele für Weinsäureester sind Dimethyltartrat, Diethyltartrat, Di-n-propyltartrat, Diisopropyltartrat und Di-n-butyltartrat. Bei der Kondensation können selbstverständlich auch Weinsäureester eingesetzt werden, bei denen nur eine Carboxylgruppe verestert ist. Bei der Kondensation der Weinsäure werden Strukturen gebildet, bei denen eine oder beide OH-Gruppen der Weinsäure mit Carboxylgruppen der Komponenten a, c oder d unter Bildung von Polyestern abreagieren. Als Waschmittelzusatz besonders geeignete Reaktionsprodukte werden auch erhalten, wenn man die Kondensation der Weinsäure oder ihrer Derivate in Gegenwart von Zitronensäure durchführt. Hierbei beträgt das Molverhältnis von Weinsäure, Weinsäureanhydrid oder Weinsäureestern zu Zitronensäure vorzugsweise 1:0,5 bis 1:2. Anwendungstechnisch wertvolle Produkte werden auch dann erhalten, wenn die oben beschriebene Kondensation von Weinsäure oder ihren Derivaten gegebenenfalls in Gegenwart von Zitronensäure zusätzlich noch in Gegenwart von bis zu 60, vorzugsweise 30 Mol.% Äpfelsäure durchgeführt wird. die Mitverwendung von Zitronensäure und Äpfelsäure bei der Kondensation hat den Vorteil, daß man Schmelzen von geringer Viskosität erhält und bei niedrigerer Temperatur kondensieren kann. Zitronensäure ist zudem per se ein besserer Builder für Waschmittel als Weinsäure. Bei einer Teilhydrolyse der erfindungsgemäß zu verwendenden Polykondensate freigesetzte Zitronensäure führt somit zu einem geringen Wirkungsverlust als im Falle der Weinsäure-Homokondensate.

Die oben beschriebenen Polyester können durch Einkondensieren weiterer Komponenten modifiziert werden. So erhält man für die Anwendung in Waschmitteln geeignete Zusätze durch Kondensation von

a) Mischungen aus Weinsäure oder Weinsäureanhydrid und Zitronensäure im Molverhältnis 1:0,1 bis 1:4 oder solchen Mischungen, die zusätzlich bis zu 60 Mol.% Äpfelsäure enthalten, mit

b) 0 bis 50 Mol.% an ein- oder mehrwertigen Alkoholen, wasserlöslichen Poly-$C_2$- bis $C_4$-alkylenglykolen oder wasserlöslichen Additionsprodukten von $C_2$-bis $C_4$-Alkylenoxiden an ein- oder mehrwertige Alkohole, Fettsäuren, Alkylphenole oder Alkylamine und/oder

c) 0 bis 90 Mol.% mindestens zwei Carboxylgruppen enthaltenden Carbonsäuren, die von den unter a) genannten Carbonsäuren verschieden sind.

Als Komponente b) geeignete einwertige Alkohole können 1 bis 22 Kohlenstoffatome haben, z.B. Methanol, Ethanol, n-Propanol, iso-Propanol, n-Butanol, sek.-Butanol, n-Hexanol, Cyclohexanol, n-Octanol, iso-Octanol, Nonanol, Palmitylalkohol, Stearylalkohol sowie Alkohole, die nach dem Ziegler-Verfahren und nach dem Oxoprozeß erhältlich sind. Die mehrwertigen Alkohole haben vorzugsweise 2 bis 6 Kohlenstoffatome, wie Ethylenglykol, Propylenglykol, Glycerin, Butandiol-1,4, und Hexandiol-1,6. Zu den wasserlöslichen Polyalkylenglykolen gehören beispielsweise Polyethylenglykole mit Molekulargewichten von 106 bis 60000, d.h. Verbindungen wie Diethylenglykol, Triethylenglykol, Tetraethylenglykol und Polyalkylenglykole mit Molekulargewichten von vorzugsweise 200 bis 12.000. Außerdem eignen sich Polypropylenglykole mit Molekulargewichten von 134 bis 800 sowie wasserlösliche Polybutylenglykole. Zu dieser Klasse von Verbindungen gehören auch Copolymerisate von Ethylenoxid und Propylenoxid sowie solche Copolymerisate, die zusätzlich gegebenenfalls noch Butylenoxid einpolymerisiert enthalten oder Copolymerisate aus Ethylenoxid und Butylenoxid oder Copolymerisate aus Propylenoxid und Butylenoxid. Die Alkylenoxideinheiten können in diesen Polymerisaten statistisch oder in Form von Blöcken verteilt sein. Sie werden dann noch als wasserlöslich im Zusammenhang vorliegender Definition bezeichnet, wenn sich 2 g des Polyalkylenglykols in einem Liter Wasser lösen. Als Komponente b) kommen außerdem wasserlösliche Additionsprodukte von $C_2$- bis $C_4$-Alkylenoxiden an ein- oder mehrwertige Alkohole in Betracht. Ein- oder mehrwertige Alkohole sind oben bereits genannt worden. Sie werden entweder mit Ethylenoxid allein oder mit Mischungen aus Ethylenoxid und Propylenoxid und gegebenenfalls zusätzlich noch Butylenoxid umgesetzt. Die Alkoxylierung erfolgt unter üblichen Reaktionsbedingungen in Gegenwart von Alkali, wie Natronlauge, Alkalilauge oder Calciumhydroxid oder Calciumoxid bei höheren Temperaturen. Die Alkylenoxide können in den Anlagerungsprodukten in Form von Blöcken oder in statistischer Verteilung vorliegen. Vorzugsweise werden als Komponente b) $C_8$- bis $C_{20}$-Alkohole mit Ethylenoxid und/oder Propylenoxid umgesetzt. Pro Mol eines Alkohols verwendet man hierbei 1 bis 80 Mol Alkylenoxid.

Als Komponente b) können auch alkoxylierte Fettsäuren verwendet werden, z.B. Reaktionsprodukte, die durch Anlagerung von Ethylenoxid und/oder Propylenoxid und gegebenenfalls Butylenoxid an $C_8$- bis $C_{22}$-Fettsäuren erhältlich sind, z.B. verwendet man als Fettsäuren Laurinsäure, Myristinsäure, Palmitinsäure oder Stearinsäure.

Als Komponente b) kommen auch alkoxylierte Alkylphenole in Betracht. Geeignete Alkylphenole enthalten beispielsweise 1 bis 12 Kohlenstoffatome in der Alkylgruppe. Vorzugsweise setzt man von diesen Verbindungen Octylphenol und Nonylphenol bei der Alkoxylierung ein. Die Alkoxylierung wird analog durchgeführt wie oben bei der Herstellung der alkoxylierten Alkohole beschrieben. Außerdem kommen als Komponente b) alkoxylierte Alkylamine in Betracht, die beispielsweise 8 bis 24 Kohlenstoffatome in der Alkylgruppe ausweisen.

Die Verbindungen der Gruppe b) werden zu 0 bis 50 Mol.% in die Polyester einkondensiert. Sofern sie bei der Cokondensation mitverwendet werden, beträgt ihr Anteil vorzugsweise 5 bis 35 Mol.%.

Polykondensate, die eine oder mehrere Verbindungen der Gruppe b) enthalten können verschiedene Vorteile aufweisen. Durch Einkondensieren von mehrwertigen Verbindungen b) lassen sich Polyester mit höheren Molmassen erzielen, die Erdalkalisalze besser binden und dispergieren können. Durch Einkondensieren von alkoxylierten $C_8$- bis $C_{20}$-Alkoholen wird die Verträglichkeit der Polykondensate mit flüssigen Wasch- und Reinigungsmitteln erhöht.

Als Verbindungen der Komponente c) werden mindestens zwei Carboxylgruppen enthaltende Carbonsäuren, die von den unter a) genannten Carbonsäuren verschieden sind, eingesetzt. Geeignete Carbonsäure enthalten keine Hydroxylgruppen und keine aromatischen Reste. Gesättigte mehrbasische Carbonsäuren dieser Art sowie solche Carbonsäuren, die eine ethylenisch ungesättigte Doppelbindung im Molekül enthalten, sind beispielsweise Bernsteinsäure, Maleinsäure, Fumarsäure, Oxalsäure, Adipinsäure, Aconitsäure, Propan-1,2,3-tricarbonsäure, Butan-1,2,3-tricarbonsäure, Pentan-1,2,3-tricarbonsäure, Butan-1,2,3,4-tetracarbonsäure, Cyclopentan-1,2,3,4-tetracarbonsäure, Cyclohexan-1,2,3,4-tetracarbonsäure, Cyclohexan-1,2,3,5-tetracarbonsäure und Cyclohexan-1,2,4,5-tetracarbonsäure. Vorzugsweise verwendet man als Verbindungen c) Butantetracarbonsäure, Cyclopentantetracarbonsäure und die Isomeren Cyclohexantetracarbonsäuren. Wie bei der Herstellung von Polyestern üblich, können die als Verbindungen c) genannten mehrbasischen Carbonsäuren in Form der Anhydride eingesetzt werden, sofern sie Anhydride bilden, oder auch als Mono- oder Diester von Alkoholen mit 1 bis 4 Kohlenstoffatomen. Als Verbindungen der Komponente c) können auch Säurechloride eingesetzt werden. Bei der Herstellung der Polyester werden die Verbindungen der Gruppe c) in einer Menge von 0 bis 90, vorzugsweise 25 bis 75 Mol.% eingesetzt.

Die Polyester können auch noch dadurch modifiziert werden, daß man die Kondenstion in Gegenwart von Monohydroxycarbonsäuren vornimmt, wie Milchsäure oder Glykolsäure. Die Verbindungen der Komponente d) werden zu 0 bis 90 Mol.% eingesetzt. Sofern sie mitverwendet werden, werden sie vorzugsweise in Mengen von 10 bis 60 Mol.% eingesetzt.

Die Herstellung der Polyester erfolgt bevorzugt in Gegenwart der üblichen Katalysatoren. Bei der Kondensation freier Polycarbonsäuren oder der Anhydride dieser Carbonsäuren wird bevorzugt p-Toluolsulfonsäure oder Sulfobernsteinsäure als Katalysator eingesetzt. Andere übliche Veresterungskatalysatoren sind beispielsweise Benzolsulfonsäure, Polystyrolpolysulfonsäuren, Schwefelsäure und Phosphorsäure. Die Katalysatoren werden im allgemeinen in Mengen von 20 bis 10000, vorzugsweise 50 bis 5000 ppm, bezogen auf die bei der Kondensation eingesetzten Komponenten, eingesetzt.

Die Kondensation kann in Gegenwart von Antioxidantien durchgeführt werden, z.B. von substituierten Phenolen, wie beispielsweise 2,5-Ditertiärbutylphenol, 2-Methylcyclohexyl-4,6-dimethylphenol, 2,6-Ditertiärbutyl-4-methylphenol, Pyrrogallol, phosphoriger Säure oder anderer üblicherweise hierfür verwendeten Antioxidantien. Diese Verbindungen verhindern Verfärbungen der Polyester durch Oxidation während der Kondensation.

Eine bevorzugte Herstellungsmethode der Polyester beruht auf der Kondensation der Komponenten in der Schmelze in Abwesenheit von inerten Verdünnungsmitteln bei Temperaturen von 120 bis 180°C in Gegenwart üblicher Katalysatoren. Dieses Verfahren wird vor allem dann angewendet, wenn bei der Kondensation Verbindungen der Komponente b) eingesetzt werden, insbesondere dann, wenn es sich bei diesen Verbindungen um Tenside oder Polyalkylenoxide handelt. Im Falle des Zusatzes von nichtionischen Tensiden als Komponente b) ist es vorteilhaft, diese zu einem späteren Zeitpunkt der Kondensation zuzugeben, um starkes Schäumen in der ersten Kondensationsphase zu verhindern. Die Verbindungen der Komponente b) können dabei auch als reines Verdünnungsmittel dienen, um die Viskosität der Schmelze

4

zu senken, ohne dabei jedoch in nennenswertem Maße mitzukondensieren. Beispielsweise kann man die Tenside gegen Ende der Reaktion zugeben und sie so während des Abkühlens in die Reaktionsmasse einarbeiten. Eine Einkondensation der Verbindungen der Komponente b) unterbleibt weitgehend, wenn man diese Verbindungen erst dann zur Schmelze zufügt, wenn die Viskosität der Schmelze (gemessen bei 120°C) mindestens 30.000 mPas beträgt. Die Verwendung von nichtionischen Tensiden, die in Waschmitteln üblich sind, als Verdünnungsmittel für die Polyester bietet dabei den Vorteil, daß keine in Waschmitteln wirkungslosen Komponenten eingebracht werden. Das Einkondensieren der Komponenten b) kann aber auch erwünscht sein, z.B. um das Molekulargewicht der Kondensate zu erhöhen oder um Verträglichkeit mit bestimmten Waschmittelformulierungen zu erreichen. Die Kondensation in der Schmelze kann in üblichen Polymerisationsvorrichtungen durchgeführt werden, die mit Rührern oder Mischern ausgestattet sind. Vorzugsweise wird die Kondensation jedoch in der Schmelze in einem Kneter durchgeführt. Beispielsweise ist hierfür ein evakuierbarer Knetreaktor mit senkrecht oder waagerecht liegender Welle, Inertgaszufuhr und Destillationseinrichtung geeignet. Andere Polymerisationsreaktoren, die über kräftige Mischeinrichtungen verfügen, sind beispielsweise Kondensationsextrusionsreaktoren, bei denen in einer ersten Reaktionszone die Schmelzkondensation unter Abdestillieren des bei der Reaktion gebildeten Wassers oder Alkohols erfolgt und in einer Ausformzone die Schmelze extrudiert und in ein kleinteiliges Reaktionsprodukt überführt wird. Die Schmelzkondensation in der ersten Reaktionszone wird vorzugsweise unter vermindertem Druck durchgeführt, z.B. bei Drücken von 0,5 bis 400 mbar.

Die Kondensation kann jedoch auch in Gegenwart von inerten Verdünnungsmitteln durchgeführt werden. Geeignete inerte Verdünnungsmittel sind beispielsweise Toluol, o-, m- und p-Xylol, Mesitylen, Cumol, aliphatische Kohlenwasserstoffe mit Siedepunkten von 110 bis 180°C , Gemische der genannten inerten Lösemittel sowie polare aprotische Lösemittel, wie Ethylenglykoldimethylether, Diethylenglykoldimethylether, Dioxan und Cyclohexanon. Die Kondensationsreaktion kann bei Einsatz niedrig siedender Lösemittel unter erhöhtem Druck vorgenommen werden oder man verwendet Lösemittelmischungen aus hochsiedenden Lösemitteln, wie Xylol oder Cumol zusammen mit Dioxan oder Cyclohexanon.

Die Kondensation kann gegebenenfalls in Gegenwart von Schutzkolloiden durchgeführt werden. Diese Maßnahme hat den Vorteil, daß das gebildete Kondensat leicht suspendierbar ist und die Bildung einer zähen und nach dem Abkühlen erstarrenden Masse verhindert wird. Geeignete Schutzkolloide sind beispielsweise alkylierte mehrwertige $C_2$- bis $C_8$-Alkohole, wie z.B. mit 3 bis 25 Mol Ethylenoxid und/oder Propylenoxid umgesetztes Glycerin, Oligoglycerin oder Pentaerythrit. Die Schutzkolloide können zusätzlich über Ether-, Ester- oder Amidbindungen gebundene $C_6$- $C_{22}$-Alkylgruppen enthalten.

Die Menge an Schutzkolloid beträgt 0,05 bis 0,5 Gew.%, bezogen auf die Polyester. Sofern Lösemittel mitverwendet werden, beträgt die Konzentration der Feststoffe, d.h. der gebildeten Polyester in dem inerten Verdünnungsmittel 10 bis 70, vorzugsweise 20 bis 65 Gew.%.

Die bisher nicht beschriebenen Polyester sind dadurch erhältlich, daß man
a) 25 bis 75 Mol.% Weinsäure, Weinsäureanhydrid oder Mischungen aus Weinsäure und Weinsäureanyhdrid und Zitronensäure im Molverhältnis 100:1 bis 0,2:1, vorzugsweise 1:0,1 bis 1:4 mit
b) 0 bis 50 Mol.% ein- oder mehrwertigen Alkoholen, wasserlöslichen $C_2$-bis $C_4$-Alkylenglykolen oder wasserlöslichen Additionsprodukten von $C_2$-bis $C_4$-Alkylenoxiden an ein- oder mehrwertigen Alkohole, Fettsäuren, Alkylphenole oder Alkylamine, und
c) 75 bis 25 Mol.% Butantetracarbonsäure, Cyclopentantetracarbonsäure, Cyclohexantetracarbonsäure, den Anhydriden der genannten Carbonsäuren und Mischungen der genannten Verbindungen,
bei Temperaturen von 120 bis 180°C in Gegenwart von üblichen Veresterungskatalysatoren bis zu K-Werten von 7 bis 80 (bestimmt nach H. Fikentscher an 2 %igen wäßrigen Lösungen der Polyester bei 25°C und pH 7) kondensiert. Die Polyester können dadurch modifiziert werden, daß die bei der Kondensation eingesetzte Komponente a) zusätzlich bis zu 60 Mol.% Äpfelsäure enthält.

Die oben beschriebenen Polyester, die entweder aus Verbindungen der Komponente a) allein bestehen oder außer der Komponente a) Verbindungen der Komponente b) und/oder c) sowie gegebenenfalls noch Verbindungen der Komponente d) einkondensiert enthalten, haben K-Werte von 7 bis 80, vorzugsweise 8 bis 50 (bestimmt nach H. Fikentscher in 2 %iger wäßriger Lösung bei 25°C und pH 7). Unmittelbar nach der Kondensation liegen die Polyester in der Säureform vor. Sie können durch Zusatz von Basen in die Salzform überführt werden. Geeignete Basen sind beispielsweise Natriumhydroxid, Kaliumhydroxid, Lithiumhydroxid, Calciumhydroxid, Soda, Pottasche, Lithiumcarbonat, Calciumcarbonat, Ammoniumcarbonat, Ammoniumhydrogencarbonat, Ammoniak, Ethanolamin, Diethanolamin oder Triethanolamin. Die Basen werden vorzugsweise in Form der wäßrigen Lösungen eingesetzt. Von den genannten Basen verwendet man vorzugsweise Natronlauge, Natriumcarbonat oder Natriumhydrogencarbonat. Die Neutralisation der Polyester erfolgt bis zu einem solchen Ausmaß, daß die wäßrigen Lösungen der neutralisierten bzw.

teilweise neutralisierten Polyester pH-Werte in dem Bereich von 5 bis 9, vorzugsweise 6 bis 8 haben. Die erfindungsgemäß zu verwendenden Polyester haben Säurezahlen von etwa 90 bis 780, vorzugsweise 265 bis 740 mg KOH/g Polyester.

Um die Polyester ohne Veränderung zu lagern, werden sie nach der zumindest teilweise vorgenommenen Neutralisation, bevorzugt in Form des neutralen Natriumsalzes, aus der wäßrigen Lösung gewonnen. Hierfür eignen sich die üblichen Verfahren, wie Gefriertrocknung, Sprühtrocknung oder Sprühwirbelschichttrocknung. Das Trocknen kann ohne weiteren Zusatz oder unter Abmischung mit waschaktiven Stoffen vorgenommen werden. Z.B. kann man durch Sprühwirbelschichttrocknung von Mischungen mit Aniontensiden, anderen polymeren Waschmitteladditiven, Gerüststoffen oder Stellmitteln ein Granulat herstellen, das die erfindungsgemäß zu verwendenden Polyester enthält. Diese Art der Formulierung kann von entscheidendem Vorteil für den Einsatz der Polyester in alkalischen oder sauren Wasch- und Reinigungsmitteln sein.

Die oben beschriebenen Polyester werden als Zusatz zu pulverförmigen und flüssigen Waschmitteln verwendet, vorzugsweise in phosphatfreien oder phosphatarmen Waschmitteln, die nicht mehr als 25 Gew.-% Natriumtriphosphat enthalten. Die Einsatzmengen betragen 0,1 bis 30, vorzugsweise 0,5 bis 15 Gew.%, bezogen auf die Waschmittelformulierung. Die erfindungsgemäß zu verwendenden Polyester besitzen ein gutes Dispergiervermögen für Tonmineralien (Clay) in der Waschflotte. Diese Eigenschaft ist deshalb wichtig, weil lehmartige Verschmutzungen von Textilgut weit verbreitet sind. Die Polyester wirken in Waschmittelformulierungen als Builder, tragen zu einer Waschaktivierung der in den Wasch- und Reinigungsmittel enthaltenden Tenside bei und bewirken außerdem während des Waschvorgangs eine Reduktion der Inkrustierung auf dem gewaschenen Textilgut und leisten einen signifikanten Beitrag zu einer Schmutzdispergierung in der Waschflotte. Gegenüber bekannten polymeren Buildern besitzen die erfindungsgemäß einzusetzenden Polyester den Vorteil, daß sie zu einem hohen Maße biologisch abbaubar sind, z.B. Abbauraten von über 90 % erreichen. Gegenüber den in der EP-PS 00 25 551 als Waschmittelzusatz beschriebenen Copolymerisaten aus Maleinsäure und Acrylsäure weisen die erfindungsgemäß zu verwendenden Polyester vor allem eine verbesserte Verträglichkeit in flüssigen Waschmittelformulierungen auf. Cokondensate von Zitronensäure und Weinsäure sind gegenüber Weinsäurehomokondensaten bevorzugt einzusetzen. Sie besitzen bei vergleichbarem Dispergiervermögen für Ton eine bessere Wirkung bei Inkrustationsinhibierung und Calciumcarbonat-Dispergierung. Darüber hinaus fördern Sie das Ablösen des Tons vom Gewebe besser.

Die Zusammensetzung von Waschmittelformulierungen kann sehr unterschiedlich sein. Gleiches gilt für die Zusammensetzung von Reinigungsmittelformulierungen. Wasch- und Reinigungsmittelformulierungen enthalten üblicherweise Tenside und gegebenenfalls Builder. Diese Angaben gelten sowohl für flüssige als auch für pulverförmige Wasch- und Reinigungsmittelformulierungen. Beispiele für die Zusammensetzung von Waschmittelformulierungen, die in Europa, in den USA und in Japan gebräuchlich sind, findet man beispielsweise in Chemical and Engn. News, Band 67, 35 (1989) tabellarisch dargestellt.

Die oben beschriebenen Polyester werden erfindungsgemäß in Waschmitteln eingesetzt, die bis zu 45 Gew.-% Phosphat enthalten, wobei die Verwendung der Polyester in Waschmitteln mit reduziertem Phosphatgehalt (darunter soll ein Phosphatgehalt von weniger als 25 Gew.% Natriumtriphosphat verstanden werden) oder in phosphatfreien Waschmitteln sowie in Reinigungsmitteln bevorzugt ist. Die Polyester können dabei in Form eines Granulats, einer Paste, einer hochviskosen Masse, als Dispersion oder als Lösung in einem Lösemittel der Waschmittelformulierung zugegeben werden. Die Polyester können auch an der Oberfläche von Stellmitteln, z.B. Natriumsulfat oder Gerüststoffen (Zeolithen oder Bentoniten) sowie anderen festen Hilfsstoffen der Waschmittelformulierung adsorbiert werden. Waschmittelformulierungen und Reinigungsmittelformulierungen sind pulverförmig oder flüssig. Sie können regional und gemäß dem speziellen Anwendungszweck verschieden zusammengesetzt sein.

Universalhaushaltswaschmittel für Trommelwaschmaschinen, wie sie in Europa weit verbreitet sind, enthalten gewöhnlich 5 bis 10 Gew.% Aniontenside; 1 bis 5 Gew.% nichtionische Tenside; 1 bis 5 Gew.% Schaumregulatoren, wie Silikonöle oder Seifen; 0 bis 40 Gew.% Enthärtungsmittel, wie Soda oder Pentanatriumtriphosphat, das durch die erfindungsgemäßen Verbindungen teilweise oder ganz ersetzt werden kann; 0 bis 30 Gew.% Ionenaustauscher, wie Zeolith A; 2 bis 7 Gew.% Natriumsilikate als Korrosionsinhibitoren; 10 bis 30 Gew.% Bleichmittel, wie Natriumperborat, Natriumpercarbonat organische Persäuren oder deren Salze; 0 bis 5 Gew.% Bleichaktivatoren, wie Tetraacetylethylendiamin, Pentaacetylglucose, Hexaacetylsorbit oder Acyloxibenzolsulfonat; Stabilisatoren, wie Magnesiumsilikat oder Ethylendiamintetraacetat; Vergrauungsinhibitoren, wie Carboximethylcellulose, Methyl- und Hydroxialkylcellulosen, mit Vinylacetat gepfropfte Polyglykole, oligomere und polymere Terephthalsäure/Ethylenglykol/Polyethylenglykol-Ester; Enzyme; optische Aufheller; Duftstoffe; Weichmacher; Farbstoffe und Stellmittel.

EP 0 483 606 A2

Im Gegensatz hierzu sind die Heavy Duty Detergents, die in den USA, Japan und diesen Ländern benachbarten Staaten in den Bottichwaschmaschinen verwendet werden, meist frei von Bleichmitteln, ihr Anteil an Aniontensiden ist dafür zwei bis dreimal so hoch, sie enthalten mehr Waschalkalien, wie Soda und Natriumsilikate (in der Regel bis zu 25 Gew.%) und zumeist fehlen ihnen auch die Bleichaktivatoren und Bleichstabilisatoren. Die Gehaltsangaben für Tenside und andere Inhaltsstoffe können sich noch beträchtlich erhöhen, wenn es sich um sogenannte Waschmittelkonzentrate handelt, die stellmittelfrei oder stellmittelarm in den Handel kommen. Fein- und Buntwaschmittel, Wollwaschmittel und Mittel für die manuelle Wäsche enthalten ebenfalls meist kein Bleichmittel und geringe alkalische Bestandteile bei entsprechend erhöhtem Tensidanteil.

Waschmittel für den gewerblichen Sektor sind auf die speziellen Verhältnisse des industriellen Waschens zugeschnitten (weiches Wasser, kontinuierliches Waschen), die es gestatten, schwerpunktmäßig auf die Art des Waschguts und der Verschmutzung einzugehen. Es werden daher Kombinationen verwendet, in denen ein Bestandteil vorherrscht oder andere ganz fehlen, die bei Bedarf getrennt zudosiert werden. Deshalb variieren die Bestandteile Tenside, Builder (Gerüststoffe), Alkalien und Bleichmittel dieser Waschmittel in weiten Grenzen.

Geeignete anionische Tenside für die vorgenannten Pulverwaschmittel sind beispielsweise Natriumalkylbenzolsulfonate, Fettalkoholsulfate und Fettalkoholpolyglykolethersulfate. Einzelne Verbindungen dieser Art sind beispielsweise $C_8$- bis $C_{12}$-Alkylbenzolsulfonate, $C_{12}$- bis $C_{16}$-Alkansulfonate, $C_{12}$- bis $C_{16}$-Alkylsulfate, $C_{12}$- bis $C_{16}$-Alkylsulfosuccinate und sulfatierte ethoxylierte $C_{12}$- bis $C_{16}$-Alkanole. Als anionische Tenside eignen sich außerdem sulfatierte Fettsäurealkanolamine, $\alpha$-Sulfofettsäureester, Fettsäuremonoglyceride oder Umsetzungsprodukte von 1 bis 4 Mol Ethylenoxid mit primären oder sekundären Fettalkolen oder Alkylphenolen. Weitere geeignete anionische Tenside sind Fettsäureester bzw. Fettsäureamide von Hydroxy- oder Aminocarbonsäuren bzw. -sulfonsäuren, wie beispielsweise die Fettsäuresarkoside, -glykolate, -lactate, -tauride oder -isothionate. Die anionischen Tenside können in Form der Natrium-, Kalium- und Ammoniumsalze sowie als lösliche Salze organischer Basen, wie Mono-, Di- oder Triethanolamin oder andere substituierter Amine vorliegen. Zu den anionischen Tensiden gehören auch die üblichen Seifen, d.h. die Alkalisalze der natürlichen Fettsäuren.

Als nichtionische Tenside (Nonionics) sind z.B. Anlagerungsprodukte von 3 bis 40, vorzugsweise 4 bis 20 Mol Ethylenoxid an 1 Mol Fettalkohol, Alkylphenol, Fettsäure, Fettamin, Fettsäureamid oder Alkansulfonamid verwendbar. Die obengenannten Anlagerungsprodukte des Ethylenoxids können gegebenenfalls zusätzlich bis zu 90 Gew.-%, bezogen auf einkondensiertes Ethylenoxid und Propylenoxid, Propylenoxid einkondensiert enthalten. Die Anlagerungsprodukte, die Ethylenoxid und Propylenoxid einkondensiert enthalten, können gegebenenfalls durch Einkondensieren von Butylenoxid in Mengen bis zu 60 Gew.-%, bezogen auf den Gesamtgehalt an Alkylenoxid, modifiziert sein. Besonders wichtig sind die Anlagerungsprodukte von 5 bis 16 Mol Ethylenoxid an Kokos- oder Talgfettalkohole, an Oleylalkohol oder an synthetische Alkohole mit 8 bis 18, vorzugsweise 12 bis 18 C-Atomen, sowie an Mono- oder Dialkylphenole mit 6 bis 14 C-Atomen in den Alkylresten. Neben diesen wasserlöslichen Nonionics sind aber auch nicht bzw. nicht vollständig wasserlösliche Polyglykolether mit 1 bis 4 Ethylenglykoletherresten im Molekül von Interesse, insbesondere wenn sie zusammen mit wasserlöslichen nichtionischen oder anionischen Tensiden eingesetzt werden.

Weiterhin sind als nichtionische Tenside die wasserlöslichen, 20 bis 250 Ethylenglykolethergruppen und 10 bis 100 Propylenglykolethergruppen enthaltenden Anlagerungsprodukte von Ethylenoxid an Polypropylenglykolether, Alkylendiaminopolypropylenglykol und Alkylpolypropylenglykole mit 1 bis 10 C-Atomen in der Alkylkette brauchbar, in denen die Polypropylenglykoletherkette als hydrophober Rest fungiert.

Auch nichtionische Tenside vom Typ der Aminoxide oder Sulfoxide sind verwendbar.

Das Schaumvermögen der Tenside läßt sich durch Kombination geeigneter Tensidtypen steigern oder verringern. Eine Verringerung läßt sich ebenfalls durch Zusätze von nichttensidartigen organischen Substanzen erreichen.

Weitere Mischungsbestandteile von Waschmitteln können auch monomere, oligomere und polymere Phosphonate, Ethersulfonate auf der Basis von ungesättigten Fettalkoholen, z.B. Oleylalkoholethoxylatbutylether und deren Alkalisalze sein. Diese Stoffe können z.B. mit Hilfe der Formel $RO(CH_2CH_2O)_n$-$C_4H_8$-$SO_3Na$, in der $n$ = 5 bis 40 und R = Oleyl ist, charakterisiert werden.

Die oben beschriebenen Polyester können auch als Zusatz zu Flüssigwaschmitteln verwendet werden. Bevorzugt in Flüssigwaschmitteln eingesetzte Polyester sind solche, die als Komponente b) alkoxylierte ein- oder mehrwertige Alkohole einkondensiert enthalten. Die Flüssigwaschmittel enthalten als Abmischkomponente flüssige oder auch feste Tenside, die in der Waschmittelformulierung löslich oder zumindest dispergierbar sind. Als Tenside kommen hierfür die Produkte in Betracht, die auch in pulverförmigen Waschmitteln eingesetzt werden sowie flüssige Polyalkylenoxide bzw. polyalkoxylierte Verbindungen. Falls die Polyester mit den übrigen Bestandteilen des Flüssigwaschmittels nicht direkt mischbar sind, kann man

7

mit Hilfe geringer Menge an Lösungsvermittlern, z.B. Wasser oder eines mit Wasser mischbaren organischen Lösemittel, z.B. Isopropanol, Methanol, Ethanol, Glykol, Diethylenglykol oder Triethylenglykol oder entsprechende Propylenglykole, homogene Mischungen herstellen. Die Tensidmenge in Flüssigwaschmitteln beträgt 4 bis 50 Gew.%, bezogen auf die gesamte Formulierung, da auch bei den Flüssigwaschmitteln je nach den regionalen Marktgegebenheiten oder dem Anwendungszweck die Anteile der Bestandteile in weiten Grenzen variieren.

Die Flüssigwaschmittel können Wasser in Mengen von 10 bis 60, vorzugsweise 20 bis 50 Gew.% enthalten. Sie können aber auch wasserfrei sein.

Wasserfreie Flüssigwaschmittel können auch Peroxoverbindungen zum Bleichen in suspendierter oder dispergierter Form enthalten. Als Peroxoverbindungen seien z.B. genannt: Natriumperborat, Peroxocarbonsäuren und Polymere mit teilweise peroxohaltigen Gruppen. Außerdem können die Flüssigwaschmittel gegebenenfalls Hydrotrope enthalten. Hierunter werden Verbindungen verstanden wie 1,2-Propandiol, Cumolsulfonat und Toluolsulfonat. Falls derartige Verbindungen zur Modifizierung der Flüssigwaschmittel eingesetzt werden, beträgt ihre Menge, bezogen auf das Gesamtgewicht des Flüssigwaschmittels, 2 bis 5 Gew.%. In vielen Fällen hat sich zur Modifizierung von pulverförmigen und flüssigen Waschmitteln auch ein Zusatz von Komplexbildnern als vorteilhaft erwiesen. Komplexbildner sind beispielsweise Ethylendiamintetraessigsäure, Nitrilotriacetat und Isoserindiessigsäure sowie Phosphonate, wie Aminotrismethylenphosphonsäure, Hydroxyethandiphosphonsäure,Ethylendiamintetraethylenphosphonsäure und deren Salze. Die Komplexbildner werden in Mengen von 0 bis 10 Gew.%, bezogen auf die Waschmittel, eingesetzt. Die Waschmittel können außerdem Zitrate, Di- oder Triethanolamin, Trübungsmittel, optische Aufheller, Enzyme, Parfümöle und Farbstoffe enthalten. Diese Stoffe sind, falls sie zur Modifzierung der Flüssigwaschmittel verwendet werden, zusammen in Mengen bis zu 5 Gew.% anwesend. Die Waschmittel sind vorzugsweise phosphatfrei. Sie können jedoch auch Phosphate enthalten, z.B. Pentanatriumtriphosphat und/oder Tetrakaliumpyrophosphat. Falls Phosphate eingesetzt werden, beträgt der Anteil der Phosphate an der Gesamtformulierung des Waschmittels bis zu 45, vorzugsweise bis zu 25 Gew.%.

Die erfindungsgemäß zu verwendenden Polyester können auch mit anderen bekannten Waschmitteladditiven (wie z.B. Vergrauungsinhibitoren, Claydispergatoren und Stoffen, die die Primärwaschwirkung verstärken, Farbübertragungsinhibitoren, Bleichaktivatoren) in Pulver- und Flüssigwaschmitteln (phosphathaltig und phosphatfrei) synergistische Effekte hervorrufen, bei denen nicht nur die Partikelschmutzdispergierung, sondern auch die Wirkung des anderen Waschmitteladditivs verstärkt werden kann.

Die Prozentangaben in den Beispielen bedeuten Gewichtsprozent. Die K-Werte der Polyester wurden nach H. Fikentscher, Cellulosechemie, Band 13, 58-64 und 71-74 (1932) in wäßriger Lösung bei einer Temperatur von 25°C und einer Konzentration an Polyester von 2 Gew.% bei pH 7 am Natriumsalz der Polyester bestimmt.

Beispiele

Herstellung der Polyester

Allgemeine Herstellungsvorschrift I

Die in Tabelle 1 angegebenen Mengen an Verbindungen der Komponenten a) bis c) werden zusammen mit dem Katalysator in einem 2 1-Dreihalskolben vorgelegt, der mit Gaseinleitungsvorrichtung, Innenthermometer, Rührer und Destillationsbrücke versehen ist. Die vorgelegten Produkte werden 30 Minuten mit Stickstoff gespült und anschließend unter Rühren auf eine Temperatur von 140°C erhitzt. Dabei schmilzt der Kolbeninhalt. Sobald eine Temperatur von 100°C überschritten ist, destilliert Wasser aus dem Gemisch ab. Nachdem man das Reaktionsgemisch 30 Minuten bei 140°C erhitzt hat, wird der Druck auf ca. 400 mbar reduziert. Die Kondensation wird weitergeführt, bis die gewünschte Menge an Wasser abdestilliert ist. Man erhält jeweils zähviskose Schmelzen, die nach dem Abkühlen erstarren oder gegebenenfalls nach Verdünnung mit einer Verbindung der Komponente b) in eine viskose, zur Weiterverarbeitung geeignete Schmelze überführt wird. Die Natriumsalze der Polyester werden dadurch hergestellt, daß man die bei der Polykondensation anfallenden Kondensate zerkleinert, bei Raumtemperatur in Wasser dispergiert und mit wäßriger Natriumcarbonatlösung neutralisiert, bis der pH-Wert der Lösung 7 beträgt. Die neutralisierten Polyester hatten die in Tabelle 1 angegebenen K-Werte.

Im folgenden werden folgende Abkürzungen verwendet:

WS: Weinsäure
CS : Citronensäure
BTC: Butan-1,2,3,4-tetracarbonsäure

| | |
|---|---|
| BTCA: | Butan-1,2,3,4-tetracarbonsäurebisanhydrid |
| BSA: | Bernsteinsäureanhydrid |
| CPTA: | Cyclopentan-1,2,3,4-tetracarbonsäurebisanhydrid |
| ADPCL: | Adipinsäuredichlorid |
| OxCl: | Oxalsäuredichlorid |
| ÄS: | Äpfelsäure |
| $EO_{34}$: | Polyethylenglykol mit einem mittleren Polymerisationsgrad $\overline{D}p$ = 34 |
| $C_{15/17}EO_7$: | Additionsprodukt von 7 Mol Ethylenoxid an 1 Mol linearen $C_{15}/C_{17}$-Alkohol |
| Gly | Glycerin |
| CON | Cyclohexanon |
| DXN | Dioxan |
| DGDM | Diethylenglykoldimethylether |
| MES | Mesitylen |
| pTS | para-Toluolsulfonsäure-Monohydrat |

Tabelle 1

| Polyester Nr. | a) [mol] | | b) [mol] | | c) [mol] | | pTS [mmol] | Reaktions- zeit [h] | temp. [°C] | K-Wert |
|---|---|---|---|---|---|---|---|---|---|---|
| 1 | WS | 1,5 | – | | – | | 0,016 | 5,5 | 145 | 11,4 |
| | CS | 1,5 | | | | | | | | |
| 2 | WS | 1,5 | $C_{15/17}EO_7$ | 0,15[1] | – | | 0,016 | 5,5 | 145 | 12,4 |
| | CS | 1,5 | | | | | | | | |
| 3 | WS | 1,5 | $C_{15/17}EO_7$ | 0,5[1] | – | | 0,016 | 5,5 | 145 | 13,2 |
| | CS | 1,5 | | | | | | | | |
| 4 | WS | 1,0 | $EO_{15}$ | 0,25[1] | – | | 0,015 | 5,0 | 140 | 13,9 |
| | CS | 2,0 | | | | | | | | |
| 5 | WS | 1,0 | – | | BSA | 1,0 | 0,015 | 7,5 | 140 | 8,9 |
| 6 | WS | 1,0 | $C_{15/17}EO_7$ | 0,5 | BTC | 1,0 | 0,019 | 5,5 | 130 | 14,0 |
| 7 | WS | 0,5 | $EO_{34}$ | 0,25 | BTC | 0,75 | 0,012 | 5,5 | 130 | 19,5 |

[1] Zusatz am Ende der Kondensationsphase nach Druckausgleich mit Inertgas

EP 0 483 606 A2

Allgemeine Herstellungsvorschrift II

Die in Tabelle 2 angegebenen Mengen an Komponenten a) bis c) werden zusammen mit der ebenfalls angegebenen Menge an p-Toluolsulfonsäure und dem jeweils verwendeten Lösemittel in einem 2 1-Dreihalskolben vorgelegt, der mit Gaseinleitungsvorrichtung, Innenthermometer, Rührer und Destillationsbrücke versehen ist, dann leitet man 30 Minuten lang Stickstoff durch und erhitzt den Kolbeninhalt auf die in der Tabelle jeweils angegebene Temperatur, wobei die Reaktionskomponenten bzw. Reaktionsprodukte teilweise oder vollständig in Lösung gehen und die Lösung im Verlauf der Reaktion viskos wird. Das Reaktionsgemisch wird für die in der Tabelle genannten Zeit auf Reaktionstemperatur gehalten und anschließend aufgearbeitet, indem man das Lösemittel im Vakuum bei Drücken von 10 bis 0,1 mbar abdestilliert. Die Natriumsalze der Polyester werden erhalten, indem man die Kondensate zerkleinert, bei Raumtemperatur in Wasser dispergiert und durch Zusatz von wäßriger Natriumcarbonatlösung auf einen pH-Wert von 7 neutralisiert. Die Produkte haben die in Tabelle 2 angegebenen K-Werte.

Tabelle 2

| Polyester Nr. | a) [mol] | | b) [mol] | | c) [mol] | | pTS [mmol] | Lösemittel [g] | | Reaktionszeit [h] | temp. [°C] | K-Wert |
|---|---|---|---|---|---|---|---|---|---|---|---|---|
| 8 | WS | 0,45 | | – | BTCA | 0,45 | 4,21 | CON | 120 | 7,0 | 140 | 11,5 |
| 9 | WS | 0,1 | Gly | 0,1 | CPTA | 0,2 | 1,74 | DXN | 55 | 8,0 | 100 | 10,3 |
| 10 | WS | 0,2 | | – | BTCA | 0,2 | 1,83 | DXN | 55 | 24,0 | 100 | 7,9 |
| 11 | WS | 0,2 | | – | CPTA | 0,2 | – | DGDM | 55 | 8,0 | 145 | 8,5 |
| 12 | WS | 0,25 | | – | ADPCl | 0,25[2] | – | DXN | 77 | 3,5 | 50/80[1] | 10,2 |
| 13 | WS | 0,25 | | – | OxCl | 0,25[2] | – | DXN | 77 | 3,5 | 50/80[1] | 11,2 |

[1] 1,5 h bei 50°C, 2 h bei 80°C
[2] Zulauf in 30 min.

Allgemeine Herstellungsvorschrift III

In einem 2 l fassenden Dreihalskolben, der mit Gaseinleitungsvorrichtung, Innenthermometer, Rührer und Wasserabscheider ausgestattet ist, werden die in Tabelle 3 angegebenen Mengen der Komponenten a) bis c), das Lösemittel und 0,72 g des weiter unten spezifizierten Schutzkolloids vorgelegt und 30 Minuten mit Stickstoff gespült. Anschließend wird der Kolbeninhalt auf die angegebene Reaktionstemperatur aufgeheizt, wobei die Einsatzstoffe teilweise in Lösung gehen, zum überwiegenden Anteil aber in festem oder geschmolzenem Zustand suspendiert werden. Das bei der Kondensation gebildete Wasser wird durch azeotrope Destillation im Wasserabscheider abgetrennt. Die Kondensation wird bis zur gewünschten Menge an Destillat durchgeführt. Anschließend wird der Polyester aufgearbeitet, indem man das Lösemittel nach dem Abkühlen dekantiert, den Rückstand in Wasser dispergiert und durch Zugabe von wäßriger Natriumcarbonatlösung bis zu einem pH-Wert von 7 neutralisiert. Anschließend destilliert man bei einer Temperatur von 50°C 100 ml des Azeotrops aus Wasser und dem restlichen Lösemittel ab.

Das Schutzkolloid wurde hergestellt durch Umsetzung von Oleylalkohol mit Epichlorhydrin im Molverhältnis 1:1 zu Oleylglycidylether, das mit Glycerin im Molverhältnis 1:1 in Gegenwart von $BF_3$-Phosphorsäure bei einer Temperatur von 80°C weiter umgesetzt wurde. Nach Entfernen des Katalysators mit Hilfe eines basischen Ionenaustauschers wurde das Reaktionsprodukt mit 2 Mol Ethylenoxid ethoxyliert.

Allgemeine Herstellungsvorschrift IV

In einem 2 l fassenden Knetreaktor mit horizontalliegender Mischerwelle, der mit einer Vakuumdestillationsvorrichtung und Thermoelement ausgerüstet ist, werden die in Tabelle 4 angegebenen Mengen an Komponenten a) bis c) zusammen mit der jeweils angegebenen Menge an p-Toluolsulfonsäure vorgelegt

Tabelle 3

| Polyester Nr. | Einsatzstoffe a) [mol] | b) [mol] | c) [mol] | pTS [mmol] | Lösemittel [g] | Reaktionszeit [h] | temp. [°C] | K-Wert |
|---|---|---|---|---|---|---|---|---|
| 14 | WS 0,5 | - | BTC 0,5 | 0,51 | Xylol 300 | 7,0 | 140 | 11,5 |
| 15 | WS 1,0 | - | BTC 0,5 | 0,70 | Xylol 300 | 8,0 | 138 | 9,5 |
| 16 | WS 1,0 CS 1,0 | - | - | 0,53 | Xylol 300 | 6,5 | 138 | 8,6 |
| 17 | WS 1,0 CS 1,0 | - | - | 0,53 | Xylol 300 | 9,0 | 138 | 8,8 |
| 18 | WS 0,5 CS 1,0 | - | - | 0,74 | Xylol 300 | 6,0 | 138 | 10,5 |
| 19 | ÄS 1,5 | - | - | 0,53 | Xylol 300 | 4,0 | 138 | 8,9 |
| 20 | WS 0,5 | - | - | 0,20 | MES 300 | 6,0 | 170 | 8,9 |
| 21 | WS 0,5 | $EO_{34}$ 0,25 | BTC 0,75 | 0,20 | Xylol 300 | 6,0 | 138 | 18,4 |
| 22 | WS 0,5 | $C_{15/17}EO_7$ 0,5 | BTC 1,0 | 0,20 | Xylol 300 | 6,0 | 138 | 15,2 |

und 30 Minuten mit Stickstoff gespült. Anschließend wird der Reaktor mit laufender Mischerwelle auf eine Innentemperatur von 140°C aufgeheizt und der Druck auf einen Wert von 300 mbar erniedrigt, wobei der Reaktorinhalt schmilzt und Wasser abdestilliert. Nach einer Reaktionszeit von 30 Minuten wird der Druck auf 100 mbar reduziert und die Kondensation soweit geführt, bis die gewünschte Menge an Wasser abdestilliert ist. Man erhält jeweils zähviskose Schmelzen der Polyester. Diese Schmelzen können gegebenenfalls durch Zusatz der Komponente b) verdünnt werden, wodurch die Viskosität der Schmelze erniedrigt wird. Je nach Verdünnungsgrad und nach dem Grad des Abkühlens erstarren die Schmelzen. Sie können mit Hilfe der Knetermechanik zerkleinert werden oder in Form der verdünnten Schmelze aus dem Reaktor ausgetragen werden. Um die Polyester zu neutralisieren, werden die Kondensate zerkleinert, bei Raumtemperatur in Wasser dispergiert und durch Zugabe von wäßriger Natriumcarbonatlösung auf einen pH-Wert von 7 eingestellt. Die Polyester haben die in Tabelle 4 angegebenen K-Werte.

Tabelle 4

| Polyester | Einsatzstoffe | | | | pTS [mmol] | Reaktions- | | K-Wert |
|---|---|---|---|---|---|---|---|---|
| Nr. | a) [mol] | | b) [mol] | | | zeit [h] | temp. [°C] | |
| 23 | WS | 1,5 | | – | 1,42 | 6,0 | 120-145 | 15,1 |
| | CS | 1,5 | | | | | | |
| 24 | WS | 3,0 | $EO_{34}$ | 0,25 | 2,84 | 5,0 | 120-145 | 32,3 |
| | CS | 3,0 | | | | | | |
| 25 | WS | 1,5 | $C_{15/17}EO_7$ | 0,81 | 1,42 | 3,5 | 120-145 | 12,9 |
| | CS | 1,5 | | | | | | |
| 26 | WS | 1,0 | $EO_{34}$ | 0,25 | 1,50 | 3,5 | 120-145 | 28,0 |
| | CS | 2,0 | | | | | | |

EP 0 483 606 A2

Anwendungstechnische Beispiele

Clay-Dispergierung

Die Entfernung von Partikelschmutz von Gewebeoberflächen wird durch Zusatz von Polyelektrolyten unterstützt. Die Stabilisierung der nach der Ablösung der Partikel von der Gewebeoberfläche entstehenden Dispersion ist eine wichtige Aufgabe dieser Polyelektrolyte. Der stabilisierende Einfluß der anionischen Dispergiermittel ergibt sich dadurch, daß infolge von Adsorption von Dispergiermittelmolekülen auf der Feststoffoberfläche deren Oberflächenladung vergrößert und die Abstoßungsenergie erhöht wird. Weitere Einflußgrößen auf die Stabilität einer Dispersion sind ferner u.a. sterische Effekte, Temperatur, pH-Wert und die Elektrolytkonzentration.

Mit dem im folgenden beschriebenen Clay-Dispergiertest (CD-Test) kann auf einfache Weise die Dispergierfähigkeit verschiedener Polyelektrolyte beurteilt werden.

CD-Test

Als Modell für partikulären Schmutz wird feingemahlener China-Clay SPS 151 benutzt. 1 g Clay wird unter Zusatz von 1 ml einer 0,1 %igen Natriumsalzlösung des Polyelektrolyten in 98 ml Wasser 10 Minuten in einem Standzylinder (100 ml) intensiv dispergiert. Sofort nach dem Rühren nimmt man aus der Mitte des Standzylinders eine Probe von 2,5 ml und bestimmt nach dem Verdünnen auf 25 ml die Trübung der Dispersion mit einem Turbidimeter. Nach 30- bzw. 60-minütiger Standzeit der Dispersion werden erneut Proben genommen und wie oben die Trübung bestimmt. Die Trübung der Dispersion wird in NTU (nephelometric turbidity units) angegeben. Je weniger sich die Dispersion während der Lagerung absetzt, um so höher sind die gemessenen Trübungswerte, und um so stabiler ist die Dispersion. Als zweite physikalische Meßgröße wird die Dispersionskonstante $\tau$ bestimmt, die das zeitliche Verhalten des Sedimentationsprozesses beschreibt. Da der Sedimentationsprozeß annähernd durch ein monoexponentielles Zeitgesetz beschrieben werden kann, gibt $\tau$ die Zeit an, in der die Trübung auf 1/e-tel des Ausgangszustandes zum Zeitpunkt t = 0 abfällt.

Je höher ein Wert für $\tau$ ist, um so langsamer setzt sich die Dispersion ab.

| Beispiel | Polyester Nr. | Trübung nach Lagerung [NTU] | | | Dispersionskonstante $\tau$ [min] |
|---|---|---|---|---|---|
| | | sofort | 30 min. | 60 min. | |
| 1 | 8 | 700 | 625 | 545 | 242,6 |
| 2 | 9 | 640 | 360 | 350 | 436,4 |
| 3 | 10 | 710 | 630 | 580 | 304,9 |
| 4 | 11 | 750 | 600 | 540 | 203,1 |
| 5 | 12 | 650 | 500 | 420 | 140,3 |
| 6 | 13 | 750 | 600 | 510 | 157,4 |
| 7 | 14 | 750 | 690 | 580 | 268,1 |
| 8 | 15 | 640 | 600 | 470 | 405,2 |
| 9 | 16 | 820 | 790 | 610 | 460,3 |
| 10 | 17 | 750 | 650 | 500 | 164,3 |
| 11 | 18 | 630 | 600 | 520 | 412,1 |
| 12 | 19 | 660 | 570 | 450 | 167,6 |
| 13 | 20 | 680 | 610 | 520 | 233,4 |
| Vergleichs-beispiel | | | | | |
| 1 | ohne Zusatz | 600 | 37 | 33 | 41,4 |
| 2 | Weinsäure | 560 | 90 | 70 | 35,3 |
| 3 | Copolymerisat aus 70 % Acrylsäure und 30 % Malein-säure vom K-Wert 60[1] | 640 | 470 | 380 | 97,9 |

Den Meßwerten ist zu entnehmen, daß man mit den erfindungsgemäß zu verwendenden Polyestern Dispersionen erhält, die nach 60-minütiger Standzeit deutlich höhere Trübungswerte (NTU-Einheiten) aufweisen als die angegebenen Vergleiche. Zusammen mit den deutlich höheren Dispersionskonstanten bedeutet dies, daß die erfindungsgemäß zu verwendenden Polyester/Clay besser dispergieren können und gleichzeitig die Herstellung von Dispersionen mit verbesserter Lagerstabilität erlauben.

Die biologische Abbaubarkeit der oben beschriebenen Polyester wurde in einem modifizierten Zahn-Wellens-Test gemäß DIN 38 412, Teil 24 Statischer Test (L25) untersucht. Beispielsweise wurden folgende Abbauwerte gefunden:

| Polyester Nr. | Biologischer Abbau [%] innerhalb von 28 Tagen |
|---|---|
| 8 | > 90 % |
| 14 | > 95 % |
| 15 | > 92 % |
| 16 | > 95 % (bereits in 14 Tagen) |
| 23 | > 94 % |

# EP 0 483 606 A2

**Patentansprüche**

1. Verwendung von wasserlöslichen oder in Wasser dispergierbaren Polyestern, die durch alleinige Kondensation von Weinsäure, Weinsäureanhydrid oder durch Kondensation von Mischungen aus Weinsäure oder Weinsäureanhydrid und Zitronensäure im Molverhältnis 1:0,1 bis 1:4 erhältlich sind, als Zusatz zu Waschmitteln.

2. Verwendung nach Anspruch 1, dadurch gekennzeichnet, daß die Polyester durch Kondensation von zusätzlich bis zu 60 Mol.% Äpfelsäure erhältlich sind.

3. Verwendung von wasserlöslichen oder in Wasser dispergierbaren Polyestern, die durch Kondensation von
   a) Mischungen aus Weinsäure oder Weinsäureanhydrid und Zitronensäure im Molverhältnis 1:0,1 bis 1:4 oder solchen Mischungen, die zusätzlich bis zu 60 Mol.% Äpfelsäure enthalten, mit - bezogen auf 1 Mol der Komponente a) -
   b) 0 bis 50 Mol.% an ein- oder mehrwertigen Alkoholen, wasserlöslichen Poly-$C_2$- bis $C_4$-alkylenglykolen oder wasserlöslichen Additionsprodukten von $C_2$- bis $C_4$-Alkylenoxiden an ein- oder mehrwertige Alkohole, Fettsäuren, Alkylphenole oder Alkylamine,

   und/oder
   c) 0 bis 90 Mol.% an mindestens zwei Carboxylgruppen enthaltenden Carbonsäuren, die von den unter a) genannten Carbonsäuren verschieden sind,

   sowie gegebenenfalls
   d) 0 bis 90 Mol.% Milchsäure, Glykolsäure oder deren Mischungen

   in Gegenwart von üblichen Veresterungskatalysatoren erhältlich sind, als Zusatz zu Waschmitteln.

4. Verfahren zur Herstellung von wasserlöslichen oder in Wasser dispergierbaren Polyestern, dadurch gekennzeichnet, daß man
   a) Mischungen aus Weinsäure oder Weinsäureanhydrid und Zitronensäure im Molverhältnis 1:0,1 bis 1:4 oder solchen Mischungen, die zusätzlich bis zu 60 Mol.% Äpfelsäure enthalten, mit - bezogen auf 1 Mol der Komponente a) -
   b) 0 bis 50 Mol.% an ein- oder mehrwertigen Alkoholen, wasserlöslichen Poly-$C_2$- bis $C_4$-alkylenglykolen oder wasserlöslichen Additionsprodukten von $C_2$- bis $C_4$-Alkylenoxiden an ein- oder mehrwertige Alkohole, Fettsäuren, Alkylphenole oder Alkylamine,

   und/oder
   c) 0 bis 90 Mol.% mindestens zwei Carboxylgruppen enthaltenden Carbonsäuren, die von den unter a) genannten Carbonsäuren verschieden sind,

   sowie
   d) 0 bis 90 Mol.% Milchsäure, Glykolsäure oder deren Mischungen

   in der Schmelze in Abwesenheit von inerten Verdünnungsmitteln bei Temperaturen von 120 bis 180°C in Gegenwart von üblichen Veresterungskatalysatoren und Abdestillieren des bei der Kondensation entstehenden Wassers umsetzt.

5. Verfahren nach Anspruch 4, dadurch gekennzeichnet, daß man die Umsetzung in einem inerten Verdünnungsmittel durchführt.

6. Verfahren nach Anspruch 4, dadurch gekennzeichnet, daß man die Umsetzung in einem Kneter durchführt und das bei der Kondensation entstehende Wasser unter vermindertem Druck abdestilliert.

7. Verfahren nach Anspruch 4 oder 6, dadurch gekennzeichnet, daß man die Komponente b) erst dann zur Schmelze zufügt, wenn ihre Viskosität (gemessen bei 120°C) mindestens 30.000 mPas beträgt.

8. Polyester, die erhältlich sind durch Kondensation von

19

a) 25 bis 75 Mol.% Weinsäure, Weinsäureanhydrid oder Mischungen aus Weinsäure oder Weinsäureanhydrid und Zitronensäure im Molverhältnis 1:0,1 bis 1:4 mit
b) 0 bis 50 Mol.% ein- oder mehrwertigen Alkoholen, wasserlöslichen Poly-$C_2$-bis $C_4$-alkylenglykolen oder wasserlöslichen Additionsprodukten von $C_2$- bis $C_4$-Alkylenoxiden an ein- oder mehrwertige Alkohole, Fettsäuren, Alkylphenole oder Alkylamine, und
c) 75 bis 25 Mol.% Butantetracarbonsäure, Cyclopentantetracarbonsäure, Cyclohexantetracarbonsäure, den Anhydriden der genannten Carbonsäuren und Mischungen der genannten Verbindungen,

bei Temperaturen von 120 bis 180°C in Gegenwart von üblichen Veresterungskatalysatoren bis zu K-Werten von 7 bis 80 (bestimmt nach H. Fikentscher an 2 %igen wäßrigen Lösungen der Polyester bei 25°C und pH 7).

9. Polyester nach Anspruch 8, dadurch gekennzeichnet, daß die bei der Kondensation eingesetzte Komponente a) zusätzlich bis zu 60 Mol.% Äpfelsäure enthält.